# NEUE EUROPÄISCHE PATENTSCHRIFT

(11) **EP 1 194 690 B2**
(45) Veröffentlichungstag und Bekanntmachung des Hinweises auf die Entscheidung über den Einspruch: **26.07.2017**
(45) Hinweis auf die Patenterteilung: 11.06.2003
(21) Anmeldenummer: 00910815.0
(22) Anmeldetag: 11.03.2000
(51) Int. Cl.: F03D 7/02, F03D 80/00, F03D 80/20

(54) **WINDENERGIEANLAGE MIT SCHATTENWURFREGELUNG**
WIND POWER PLANT PROVIDED WITH CAST SHADOW CONTROL
INSTALLATION D'ENERGIE EOLIENNE A REGULATION DE LA PROJECTION DE L'OMBRE

(30) Priorität: 30.06.1999 DE 19929970
(43) Veröffentlichungstag der Anmeldung: 10.04.2002
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP2000/002158
(87) Internationale Veröffentlichungsnummer: WO 2001/002723

(56) Entgegenhaltungen:
- DE-A- 19 928 048
- DATABASE INSPEC [Online] INSTITUTE OF ELECTRICAL ENGINEERS, STEVENAGE, GB; VERKUIJLEN E ET AL: "Shadow effect of windmills" Database accession no. 2208473 XP002139499 -& ENERGIESPECTRUM, OCT.-NOV. 1983, NETHERLANDS, Bd. 7, Nr. 10-11, Seiten 297-302, XP002139551 ISSN: 0165-2117
- VERKUIJLEN E ET AL: "SHADOW HINDRANCE BY WIND TURBINES" EUROPEAN WIND ENERGY CONFERENCE 1984: PROCEEDINGS OF AN INTERNATIONAL CONFERENCE, EWEC '84.;HAMBURG, W GER, 1985, Seiten 356-361, XP000922538 Commis Eur Commun Rep EUR 1985 H. S. Stephens & Associates, Bedford, Engl
- DANISH WIND TURBINE MANUFACTURERS ASSOCIATION WEB SITE, [Online] XP002139498 Gefunden im Internet: <URL:http://www.windpower.dk/tour/env/shad ow/index.htm> [gefunden am 2000-06-06]

## Beschreibung

Bei der Planung und Aufstellung von Windenergieanlagen spielen die zu erwartenden optischen Beeinträchtigungen der Windenergieanlage auf die Umwelt eine zunehmend wichtige Rolle für die Genehmigung und Akzeptanz. Ist beispielsweise eine Windenergieanlage in der Nähe eines Wohnhauses plaziert siehe VERKUIJLEN E. ET AL : "SHADOW HINDRANCE BY WIND TURBINES" EUROPEAN WIND ENERGY CONFERENCE 1984 : PROCEEDINGS OF AN INTERNATIONAL CONFERENCE, EWEC 1984. HAMBURG 1985, SEITEN 356-361, so ist es bei ungünstigen Sonnenständen möglich, daß die Windenergieanlage bzw. ihr Rotor zwischen der Sonne und dem Wohnhaus angeordnet ist. Wenn der Sonnenschein nicht durch Wolken beeinflußt ist, wirft der sich drehende Rotor ständig einen (Schlag-) Schatten auf das Grundstück. Der durch die Windenergieanlage erzeugte Schattenwurf auf das benachbarte Anliegen wird von den Anwohnern oft als sehr störend wahrgenommen. Auch wenn die Windenergieanlage den genehmigungsrechtlichen Anforderungen genügt, ist jedoch nicht immer gewährleistet, daß der unerwünschte Schattenwurf unterbunden wird.

Die Aufgabe wird erfindungsgemäß mit einem Verfahren zum Betrieb einer Windenergieanlage nach Anspruch 1 gelöst. Vorteilhafte Weiterbildungen sind in den Unteransprüchen beschrieben.

Der Erfindung liegt die Erkenntnis zugrunde, daß der Schattenwurf nur bei einem bestimmten Sonnenstand eintreten kann, wenn eine direkte Sonneneinstrahlung mit hoher Lichtintensität gegeben ist. Der Sonnenstand ist bekanntlich abhängig von der Jahres- und Tageszeit und kann mittels Messung oder Berechnungsprogrammen für jeden relevanten Immissionspunkt (das ist die Stelle [Bereich], an der der Schattenwurf auftreten kann) ermittelt werden. Grundlage fürdie Schattenabschaltung einer Windenergieanlage sind demgemäß die berechneten Zeiten, in denen es aufgrund des Sonnenstandes und der geografischen Anordnung der Anlage zu einem Schattenwurf bei einem Anlieger (am Immissionspunkt) kommen kann. Parallel zu den vorgegebenen Sonnenstandszeiten wird über einen Lichtsensor die Lichtintensität ermittelt und damit die Plausibilität eines auftretenden Schattenwurfs überprüft. Nur wenn während der vorgegebenen Sonnenstandszeiten, bei denen ein Schattenwurf am Immissionspunkt möglich ist, die Helligkeit ausreicht, einen Schattenwurf zu verursachen, erfolgt die Schattenabschaltung der Windenergieanlage.

Die Schattenabschaltung kann bei der erfindungsgemäßen Windenergieanlage über eine Eingabe/Anzeigeeinrichtung (LC-Display) bedient werden. Hierzu können die Einstellungen bzw. Werte der aktuellen und der Abschalt-Lichtintensität abgelesen werden. Des weiteren ist dem Display zu entnehmen, welchen Status die Abschaltung momentan besitzt, d.h. ob sie ein- oder ausgeschaltet bzw. aktiv oder inaktiv ist. In einem separaten Menü kann die Eingabe der Abschaltzeiten vorgegeben bzw. geladen werden.

Im Modus "Schattenabschaltung" werden die Parameter aktuelle Lichtintensität (Wert in %), Abschalt-Lichtintensität (Wert in %), Schatten-Abschaltung (ein/aus) bzw. Schatten-Abschaltung (aktiv/inaktiv) angezeigt. Abschalt-Lichtintensität ist hierbei ein Wert der Lichtintensität, bei dem die Windenergieanlage abzuschalten ist. Steht beispielsweise eine Windenergieanlage sehr nahe an einem betroffenen Immissionspunkt, so ist auch bei leicht bedecktem Himmel der auftretende Schattenwurf störend. Daher sollte in diesem Fall (die Windenergieanlage steht sehr nahe am betroffenen Immissionspunkt) die Anlage einen niedrigeren Wert für die Abschaltintensität erhalten als für den Fall, wenn der Immissionspunkt weiter weg von der Windenergieanlage steht. Bei den Lichtintensitäten bedeutet ein niedriger Prozentwert eine geringe Lichtintensität (z.B. bei wolkenverhangenem Himmel) und ein hoher Prozentwert eine starke Lichtintensität z.B. direkte Sonneneinstrahlung), was darauf schließen läßt, daß die Sonneneinstrahlung nicht durch einen Wolkenverhang oder Nebel gestört ist. Schatten-Abschaltung (ein/aus) zeigt an, ob diese überhaupt aktiviert ist. Schatten-Abschaltung (aktiv/inaktiv) gibt an, ob die Anlage momentan wegen Schattenwurfs abgeschaltet ist.

Wird für die aktuelle Lichtintensität ein Wert oberhalb der Abschalt-Lichtintensität ermittelt und ergibt sich gleichzeitig eine Übereinstimmung im eingegebenen Zeitfenster, welches die Sonneneinstrahlung bzw. den Sonnenstand berücksichtigt, stoppt die Windenergieanlage automatisch, sofern die Schattenabschaltung auf "ein" geschaltet ist. Während die Anlage wegen Schattenwurfs gestoppt ist, erscheint im Hauptmenü der Anzeigeeinrichtung eine entsprechende Statusmeldung.

Der Wert der Abschalt-Lichtintensität kann über entsprechende Eingaben verändert werden. Da der Schatten der Rotorblätter mit zunehmender Entfernung zum Immissionspunkt schwächer wird und irgendwann ganz an Bedeutung verliert, wirkt sich der Schattenwurf mit zunehmender Entfernung auch nur bei höherer Lichtintensität ungünstig aus. Als sinnvoll eingestellten Wert für die Abschalt-Lichtintensität können durchschnittlich 60% angesetzt werden. Die Abschalt-Lichtintensität muß jedoch je nach lokalen Gegebenheiten eingestellt werden, weil die Abschalt-Lichtintensität auch von den geografischen Gegebenheiten vor Ort abhängt.

Die Lichtverhältnisse werden auch nach dem Stop der Anlage ständig weiter gemessen. Die Windenergieanlage startet automatisch wieder, wenn die Abschalt-Lichtintensität für eine Dauer von mehr als 2 Minuten, vorzugsweise 10 Minuten, unterschritten wird oder der Schatten soweit gewandert ist (aufgrund von Veränderung des Sonnenstandes bzw. aufgrund der Sonnenbahn), daß keine Beeinträchtigungen durch Schattenwurf am Immissionspunkt mehr vorliegen.

Die Zeiten für das Auftreten des Schattenwurfs werden zur Eingabe über ein Menü editiert. Dabei setzen sich die Werte aus einem Anfangs- und einem Enddatum sowie einer Start- und einer Stoppzeit zusammen. Eingegebene Werte können jederzeit geändert, erweitert oder gelöscht werden, was mittels manueller Eingabe oder durch das Einlesen eines entsprechenden Programms erfolgen kann.

Die Sonnenstandszeiten werden im Format der Winterzeit eingegeben. Ebenso werden bei der Programmierung Schaltjahre berücksichtigt.

Die Zeiten für die Schattenabschaltung sind aktuell oder im nachhinein stets über Fernüberwachung abrufbar, so daß ein Nachweis zur Einhaltung geführt werden kann.

Die Erfindung ist nachfolgend anhand eines Ausführungsbeispiels näher erläutert.
- Fig. 1: zeigt in der Seitenansicht den Schattenwurf bei zwei verschiedenen Sonnenständen; und
- Fig. 2: zeigt in der Obenaufsicht den Schattenwurf bei ebenfalls zwei verschiedenen Sonnenständen.

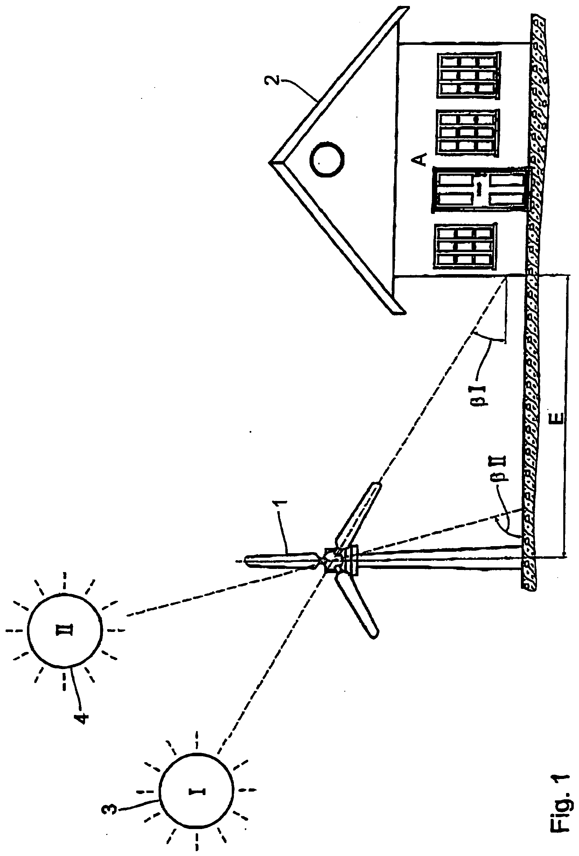

In Fig. 1 ist eine Windenergieanlage, z.B. vom Typ E-40 der Firma Enercon gezeigt, welche in einer bestimmten Entfernung E zu einem Haus 2 steht. Dieses Haus 2 kann auch als Immissionspunkt A bezeichnet werden.

Wenn morgens die Sonne aufgeht bzw. in der Winterzeit auch tagsüber, steigt die Sonne nur - immer vom Immissionspunkt A aus gesehen - auf eine geringe Höhe an, so daß sich beim Sonnenstand I ein Einfallswinkel βI ergibt.

Steigt die Sonne höher - Sonnenstand II - ergibt sich ein anderer Einfallswinkel βII der Sonnenstrahlen. Diese Einfallswinkel βI und βII (es sind jedwede andere Einfallswinkel denkbar) der Sonnenstrahlen legen auch fest, wann es überhaupt zu einem direkten Schattenwurf am Immissionspunkt A kommen kann.

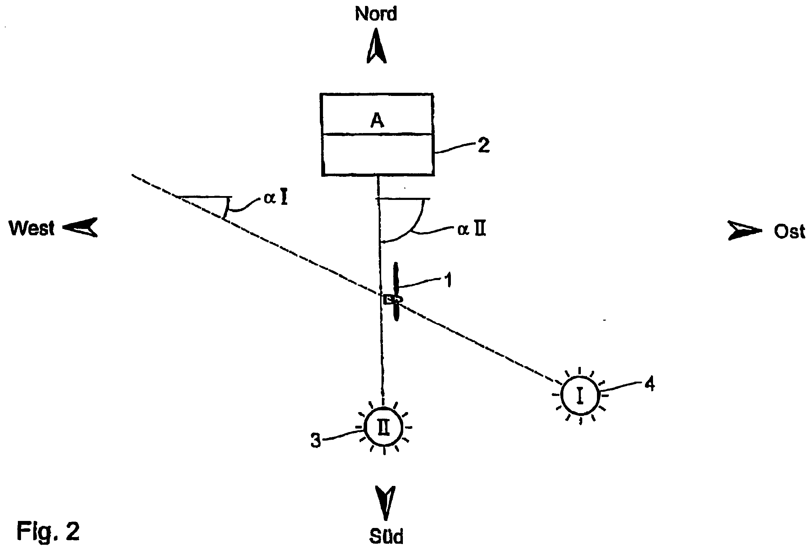

Die in Fig. 1 dargestellte Szene ist in Fig. 2 nochmals aus einer anderen Perspektive gezeigt. Wenn die Sonne (wiederum vom Immissionspunkt aus betrachtet) im Südosten steht, treffen die Sonnenstrahlen in einem Winkel αI - bezogen auf die Westostachse - auf die Windenergieanlage.

Sobald die Sonne weiter Richtung Süden gewandert ist, fallen die Sonnenstrahlen in einem anderen Winkel αII auf die Windenergieanlage 1.

Nur wenn der Sonnenstand, welcher eine Funktion des geografischen Ortes auf der Erde sowie der Einfallswinkel α und β ist, dafür sorgt, daß der Schatten der Windenergieanlage auf den Immissionspunkt A trifft, wird die Windenergieanlage abgeschaltet, wenn die Lichtintensität am Immissionspunkt über einen vorbestimmten Wert, nämlich einer Abschalt-Intensität liegt. Die Abschalt-Intensität hängt nicht nur vom Lichteinfall ab, sondern auch von der Entfernung zum Immissionspunkt. Steht eine Windenergieanlage sehr nahe am betroffenen Immissionspunkt, so kann auch bei leicht bedecktem Himmel der auftretende Schattenwurf störend sein. In einem solchen Fall sollte daher die Windenergieanlage einen niedrigeren Wert für die Abschalt-Intensität erhalten, als für den Fall, wenn der Immissionspunkt weiter weg von der Windenergieanlage steht.

Liegt die Lichtintensität unterhalb der Abschalt-Intensität, wird die Windenergieanlage - unabhängig vom Sonnenstand - nicht abgeschaltet und kann weiterhin elektrische Energie erzeugen. Ein solcher Fall ist insbesondere bei starker Bewölkerung gegeben.

Je weiter weg eine Windenergieanlage vom Immissionspunkt angeordnet ist, um so kürzer sind die Zeiten, innerhalb derer sich überhaupt ein Schattenwurf am Immissionspunkt einstellen kann.

Die Lichtintensität kann direkt am Immissionspunkt A oder an der Windenergieanlage gemessen werden. Da der Immissionspunkt und die Windenergieanlage relativ nahe zueinander stehen, sind die an der Windenergieanlage gemessenen Lichtintensitätswerte auch für den Immissionspunkt A gültig.

Die Lichtintensität selbst kann beispielsweise mit einem Lichtsensor gemessen werden, dessen Werte von einer Datenverarbeitungseinrichtung, die der Windenergieanlage zugeordnet ist, verarbeitet werden. In dieser Datenverarbeitungseinrichtung sind auch die Sonnenstände programmiert, bei denen ein Schattenwurf am Immissionspunkt auftreten kann. Es ist leicht ersichtlich, daß diese "Schattenwurf"-Sonnenstände für jede Windenergieanlage verschieden sind und daher die Datenverarbeitungseinrichtung für jede Windenergieanlage einen anderen Sonnenstand gespeichert hat, bei dem der Schattenwurf auftreten kann.

Selbstverständlich ist es auch möglich, daß bei einem Windpark, welcher in der Nähe eines Immissionspunktes angeordnet ist, wo Schattenwurf zu vermeiden ist, durch eine zentrale Datenverarbeitungseinrichtung gesteuert werden kann, die jeweils einzelne Windenergieanlagen eines Windparks dann ausschaltet, wenn durch diese ein Schattenwurf am Immissionspunkt gegeben ist.

Tritt ein Schattenwurf auf, so wird nicht sofort abgeschaltet, sondern erst dann, wenn der Schattenwurf über eine gewisse Zeit, beispielsweise 5 bis 10 Minuten gegeben ist.

Tritt ein Schattenwurf auf, so wird nicht sofort abgeschaltet, sondern erst dann, wenn der Schattenwurf über eine gewisse Zeit, beispielweise 5 bis 10 Minuten gegeben ist.
Ist der Schattenwurf nicht mehr gegeben, beispielsweise weil zwischen die Sonne und die Windenergieanlage Wolken getreten sind, ist vorzusehen, die Windenergieanlage nicht sofort wieder anzuschalten, sondern eine gewissen Zeit, z.B. 5 bis 10 Minuten, zu warten, und erst dann für eine Anschaltung und für eine wieder anlaufende Windenergieanlage zu sorgen, wenn innerhalb dieser Zeit die Lichtintensität unterhalb der Abschalt-Intensität lag.

Es ist auch möglich, neben bereits programmierten Abschalt-Sonnenständen weitere Sonnenstände für die Windenergieanlage zu programmieren, wenn dies notwendig ist.

## Patentansprüche

1. Verfahren zum Betrieb einer Windenergieanlage, welche bei einem vorbestimmten Sonnenstand abschaltet, wenn an einem Immissionspunkt die Lichtintensität der direkten Sonneneinstrahlung über einem vorbestimmten Wert (Abschalt-Intensität) liegt,
**dadurch gekennzeichnet, dass** dann, wenn die Lichtintensität der direkten Sonneneinstrahlung unter dem vorbestimmten Wert liegt, also ein Schattenwurf am Immissionspunkt nicht mehr gegeben ist, die Windenergieanlage nicht sofort wieder anschaltet, sondern eine gewisse Zeit, nämlich mehr als 2 Minuten, gewartet wird und erst dann eine Anschaltung und ein Anlaufen der Windenergieanlage erfolgt, wenn innerhalb dieser gewissen Zeit die Lichtintensität am Immissionspunkt unterhalb der Abschalt-Intensität liegt.

2. Verfahren nach einem der vorhergehenden Ansprüche,
**dadurch gekennzeichnet, dass** die Windenergieanlage bei einem vorbestimmten Sonnenstand zumindest zeitweise abgeschaltet wird.

3. Verfahren nach einem der vorhergehenden Ansprüche,
**dadurch gekennzeichnet, dass** die vorbestimmten Sonnenstände, bei denen eine Abschaltung der Anlage ausgelöst werden kann, in der Windenergieanlage oder einer ihr zugeordneten Steuer- und/oder Datenverarbeitungseinrichtung gespeichert sind.

4. Verfahren nach einem der vorhergehenden Ansprüche,
**dadurch gekennzeichnet, dass** die Lichtintensität mittels eines Lichtsensors ermittelt wird und aus der ermittelten Lichtintensität mittels eines Datenverarbeitungsprogramms eine Bewertung vorgenommen wird, ob überhaupt eine für Schattenwurf ausreichende Sonneneinstrahlung gegeben ist.

5. Windenergieanlage zur Durchführung des Verfahrens nach einem der vorhergehenden Ansprüche mit einer die Windenergieanlage steuernde Datenverarbeitungseinrichtung, in der die Sonnenstände bzw. diesbezügliche repräsentative Werte gespeichert sind und eine Einrichtung zur Ermittlung an einem Immissionspunkt der absoluten Lichtintensität der direkten Sonneneinstrahlung, wobei die Abschaltung der Windenergieanlage erfolgt, wenn die gemessene Lichtintensität am Immissionspunkt über einem vorbestimmten Wert (Abschalt-Intensität) liegt,
**dadurch gekennzeichnet, dass** dann, wenn ein Schattenwurf am Immissionspunkt nicht mehr gegeben ist, die Windenergieanlage nicht sofort wieder angeschaltet wird, sondern erst nach einer gewissen Zeit, nämlich mehr als zwei Minuten, wenn innerhalb dieses Zeitraums die Lichtintensität der Sonneneinstrahlung am Immissionspunkt unterhalb des vorbestimmten Wertes liegt.

6. Windenergieanlage nach Anspruch 5,
**dadurch gekennzeichnet, dass** die Windenergieanlage mit einem Lichtsensor gekoppelt ist, mittels dem die jeweils aktuelle oder über eine gewisse Zeit ermittelte Lichtintensität gemessen wird und dass die von dem Lichtsensor ermittelten Daten von der Datenverarbeitungseinrichtung verarbeitet werden und eine Abschaltung der Windenergieanlage erfolgt, wenn bei Einnahme eines vorbestimmten Sonnenstandes die Lichtintensität über einem vorbestimmten Wert liegt, bei dem zu erwarten ist, dass die Windenergieanlage einen Schatten wirft.

7. Windenergieanlage nach einem der vorhergehenden Ansprüche,
**dadurch gekennzeichnet, dass** die Anlage über eine Anzeigeeinrichtung verfügt, mittels welcher der Status der Schattenabschaltung wiedergegeben werden kann.

8. Windenergieanlage nach einem der vorhergehenden Ansprüche,
**dadurch gekennzeichnet, dass** über die gespeicherten Sonnenstände hinaus neue Sonnenstände für weitere Immissionspunkte eingespeichert werden können, was mittels einer entsprechenden Programmierung durchgeführt wird.

9. Windpark mit mehreren Windenergieanlagen nach einem der vorhergehenden Ansprüche.

## Claims

1. Method for operation of a wind energy system, which switches off at a predetermined solar state, when at an inward radiation point the light intensity of the direct solar radiation is greater than a predetermined value (switching-off intensity),
**characterised in that** when the light intensity of the direct solar radiation is less than the predetermined value, i.e. shadows are no longer produced at the inward radiation point, the wind energy system is not switched on again immediately, but there is a wait of a certain time, namely more than 2 minutes, and the wind energy system is only switched on and started up when within this certain time the light intensity at the inward radiation point is less than the switching-off intensity.

2. Method according to one of the preceding claims [sic], **characterized in that** the wind energy system is switched off at least temporarily at a predetermined solar state.

3. Method according to one of the preceding claims, **characterized in that** the predetermined solar states at which the process of switching off the system can be initiated are stored in the wind energy system or in a control and/or data processing device which is associated with it.

4. Method according to one of the preceding claims, **characterized in that** the light intensity is determined by means of a light sensor, and a data processing program uses the determined light intensity to carry out an assessment as to whether solar radiation which is sufficient to produce shadows is in fact present.

5. Wind energy system for carrying out the method according to one of the preceding claims, having a data processing device which controls the wind energy system and in which the solar states or values which are representative of them are stored, and a device for determining at an inward radiation point the absolute light intensity of the direct solar radiation, with the wind energy system being switched off when the measured light intensity at the inward radiation point is greater than a predetermined value (switching-off intensity),
**characterised in that** when shadows are no longer produced at the inward radiation point, the wind energy system is not switched on again immediately, but only after a certain time, namely more than two minutes, if within this period the light intensity of the solar radiation at the inward radiation point is less than the predetermined value.

6. Wind energy system according to Claim 5, **characterized in that** the wind energy system is coupled to a light sensor, which is used to measure the respective current light intensity or the light intensity determined over a certain time, and **in that** the data which is determined by the light sensor is processed by the data processing device, and the wind energy system is switched off if when a predetermined solar state has been assumed the light intensity is greater than a predetermined value at which it can be expected that the wind energy system will produce a shadow.

7. Wind energy system according to one of the preceding claims, **characterized in that** the system has an indicating device, which can be used to show the status of the shadow switching-off process.

8. Wind energy system according to one of the preceding claims, **characterized in that** new solar states for further inward radiation points can be stored in addition to the stored solar states, and this is achieved by means of appropriate programming.

9. Wind park having a number of wind energy systems according to one of the preceding claims.

## Revendications

1. Procédé de fonctionnement d'une éolienne, laquelle se déconnecte quand le soleil est dans une position prédéterminée, lorsque l'intensité lumineuse du rayonnement direct du soleil à un point d'immission est supérieure à une valeur prédéterminée (intensité de déconnexion),
**caractérisé en ce que**, lorsque l'intensité lumineuse du rayonnement direct du soleil est inférieure à la valeur prédéterminée, qu'il n'y a donc plus de projection d'ombre au point d'immission, l'éolienne ne se remet pas immédiatement en marche, mais il est attendu un certain temps, à savoir plus de 2 minutes, et alors seulement une mise en marche et un démarrage de l'éolienne a lieu, lorsque pendant ce certain temps, l'intensité lumineuse au point d'immission est inférieure à l'intensité de déconnexion.

2. Procédé selon l'une quelconque des revendications précédentes,
**caractérisé en ce que** l'éolienne est déconnectée au moins temporairement quand le soleil est dans une position prédéterminée.

3. Procédé selon l'une quelconque des revendications précédentes,
**caractérisé en ce que** les positions du soleil prédéterminées, pour lesquelles une déconnexion de l'installation peut être déclenchée, sont enregistrées dans l'éolienne ou dans un dispositif de commande et/ou de traitement de données qui lui est associé.

4. Procédé selon l'une quelconque des revendications précédentes,
**caractérisé en ce que** l'intensité lumineuse est déterminée au moyen d'un capteur de lumière et il est procédé à une évaluation à partir de l'intensité lumineuse déterminée au moyen d'un programme de traitement de données pour déterminer s'il y a un rayonnement du soleil suffisant pour une projection d'ombre.

5. Eolienne pour la réalisation du procédé selon l'une quelconque des revendications précédentes avec un dispositif de traitement de données commandant l'éolienne, dans lequel les positions du soleil ou les valeurs représentatives afférentes sont enregistrées et un dispositif de détermination de l'intensité lumineuse absolue du rayonnement direct du soleil à un point d'immission, dans laquelle la déconnexion de l'éolienne a lieu lorsque l'intensité lumineuse mesurée au point d'immission est supérieure à une valeur prédéterminée (intensité de déconnexion),
**caractérisée en ce que**, lorsqu'il n'y a plus de projection d'ombre au point d'immission, l'éolienne n'est pas immédiatement remise en marche, mais seulement après un certain temps, à savoir plus de deux minutes, lorsque, pendant cette période, l'intensité lumineuse du rayonnement du soleil au point d'immission est inférieure à la valeur prédéterminée.

6. Eolienne selon la revendication 5,
**caractérisée en ce que** l'éolienne est couplée à un capteur de lumière, au moyen duquel l'intensité lumineuse respectivement actuelle ou déterminée pendant un certain temps est mesurée et **en ce que** les données déterminées par le capteur de lumière sont traitées par le dispositif de traitement de données et une déconnexion de l'éolienne a lieu lorsqu'en cas d'adoption d'une position prédéterminée du soleil, l'intensité lumineuse est supérieure à une valeur prédéterminée, pour laquelle il faut s'attendre à ce que l'éolienne projette une ombre.

7. Eolienne selon l'une quelconque des revendications précédentes,
**caractérisée en ce que** l'installation dispose d'un dispositif d'affichage, au moyen duquel l'état de la déconnexion pour cause d'ombre peut être représenté.

8. Eolienne selon l'une quelconque des revendications précédentes,
**caractérisée en ce que** de nouvelles positions du soleil allant au-delà des positions du soleil enregistrées peuvent être enregistrées pour d'autres points d'immission, ce qui est réalisé au moyen d'une programmation correspondante.

9. Parc éolien avec plusieurs éoliennes selon l'une quelconque des revendications précédentes.
